Europäisches Patentamt

European Patent Office

Office européen des brevets

(19)

(11) Publication number : **0 324 995 B1**

## (12) EUROPEAN PATENT SPECIFICATION

(45) Date of publication of patent specification :
04.03.92 Bulletin 92/10

(51) Int. Cl.⁵ : **A22C 17/04**

(21) Application number : **88202819.4**

(22) Date of filing : **08.12.88**

(54) **Device for boning meat.**

(30) Priority : **19.01.88 NL 8800121**

(43) Date of publication of application :
**26.07.89 Bulletin 89/30**

(45) Publication of the grant of the patent :
**04.03.92 Bulletin 92/10**

(84) Designated Contracting States :
**AT BE CH DE ES FR GB GR IT LI LU NL SE**

(56) References cited :
EP-A- 0 070 605
EP-A- 0 086 020
EP-A- 0 133 332
EP-A- 0 244 032
EP-A- 0 271 967

(73) Proprietor : **STORK PROTECON B.V.**
**Industrielaan 63**
**NL-5940 AE Oss (NL)**

(72) Inventor : **Ketels, Gerardus Hubertus**
**Johannes**
**De la Genestestraat 16**
**NL-5361 CV Grave (NL)**

(74) Representative : **Baarslag, Aldert D. et al**
**Nederlandsch Octrooibureau**
**Scheveningseweg 82 P.O. Box 29720**
**NL-2502 LS 's-Gravenhage (NL)**

EP 0 324 995 B1

Jouve, 18, rue Saint-Denis, 75001 PARIS

## Description

The invention relates to a device for boning meat, as given in the preamble of claim 1.

Such a device is known from European Patent Application Nr. 0 086 020 (Fig. 10). It shows a cutting edge which lies around the press area and at the end of the pressing boning operation is pressed onto a counterface of the other press element in order to separate the meat pressed away from between the pressure faces fully from the bone still between them, wherever bone membrane, sinews and the like still connect the meat to the bone.

The first part here rests on a supporting surface in the second part, which supporting surface is movable in the direction of pressing with respect to the second part and rests on a diaphragm outside the second part, which diaphragm encloses a gas space, closed to the outside to form a gas spring. This allows the first part to be pushed deeper into the second part during pressing, to allow the cutting edge to become fully active at the end of the pressing operation.

A disadvantage of such devices is that at the end of the pressing operation the press pressure has to distribute itself over pressure faces and cutting edge, so that the pressure on the cutting edge cannot be high unless the total pressure force is greatly increased, which greatly increases the mechanical forces and thus the strains on the system and necessitates a heavier design of press and of the drive. When the first part moves deeper into the second part towards the end of the pressing operation, the gas in the gas space is compressed, so that the pressure exerted by the first part on meat and bones increases. Moreover, this means that the press pressure on the bones left behind between the pressure faces risks being greatly increased, so that there is a risk of those bones being crushed too much. Besides, it is difficult in such a device to prevent the cutting edge from starting to cut too soon, i.e. before the meat is pressed sufficiently away from between the pressure faces.

The object of the invention is then to find a solution to this, combining simplicity of design and operation with efficient carrying out of a high cutting pressure at the end of the boning operation.

For this purpose, a device of the type referred to in the preamble is characterized by the characterizing part of claim 1.

The liquid used can be water. When the valve is closed, during pressing the press pressure will be passed on by the liquid through the then shut-off space to the part within the cutting edge, and this will cause a corresponding pressure to arise in said space without any appreciable change in volume. When the valve is open the liquid can leave said space, which means that the pressure force is not passed on (or with some counterpressure for the liquid at the outflow side of the valve only to a slight degree) to said part situated within the cutting edge, and the pressure force is thus all or virtually all used to exert pressure between cutting edge and counterface. During said cutting the valve can be open or can be closed again immediately after the outflow of any liquid, in order to maintain a desired, now lower pressure force on the bones, so that no meat returns to the bone before it is properly severed.

At the next press stroke it must then, of course, be ensured that the space is filled completely with liquid again. This can be carried out simply by maintaining a slight liquid pressure at the outflow side of the valve to fill the liquid space again if no pressing is taking place, thus if there is hardly any pressure in said liquid space.

It is easy and advantageous to design the device in such a way that when the liquid space is filled and shut off for pressing the pressure faces within the cutting edge in the direction of pressing lie closer together than the cutting edge and its counterface. The meat can then come away freely during the pressing, without being impeded by cutting edge and counterface, while during cutting the liquid space is so much shorter in the direction of pressing due to discharged liquid that the cutting edge can easily go against the counterface, unimpeded by the pressure faces now projecting less or not projecting at all.

The filling and emptying of the liquid space can be controlled in a simple manner, for example with sensors which observe the closing of the press (the pressure faces going on top of one another) and operate it with a delay device in a signal line to the valve. After cutting, the press can be opened, and this opening movement or a certain open position of the pressing elements ensure that the liquid space is filled again for the next pressing.

The invention will now be explained in greater detail with reference to the appended drawings, showing the parts of a boning device which are important for the invention, in a preferred embodiment, leaving out other drive parts etc. for which you may refer to known designs such as according to the above-mentioned European Patent 70,605. In the drawings;

Fig. 1 shows a vertical section through said device in the open position;

Fig. 2 shows a vertical section of the lower die only, along a plane at right angles to the plane of Fig. 1;

Fig. 3 shows the same section as Fig. 1, during boning by pressing; and

Fig. 4 shows the same section during cutting after pressing.

A press has an upper die 1 and a lower die 2 which can be moved vertically towards each other for pressing. A hollow of upper die 1 contains a press element 3 of hard elastic material such as polyurethane with a recess 4 to accommodate a bone, as known from the above-mentioned European patent. The face part 5 of the steel upper die around said press element serves as the counterface for a cutting edge, and to this end can be provided with an extremely hard, for example welded-on layer, for example of carbide.

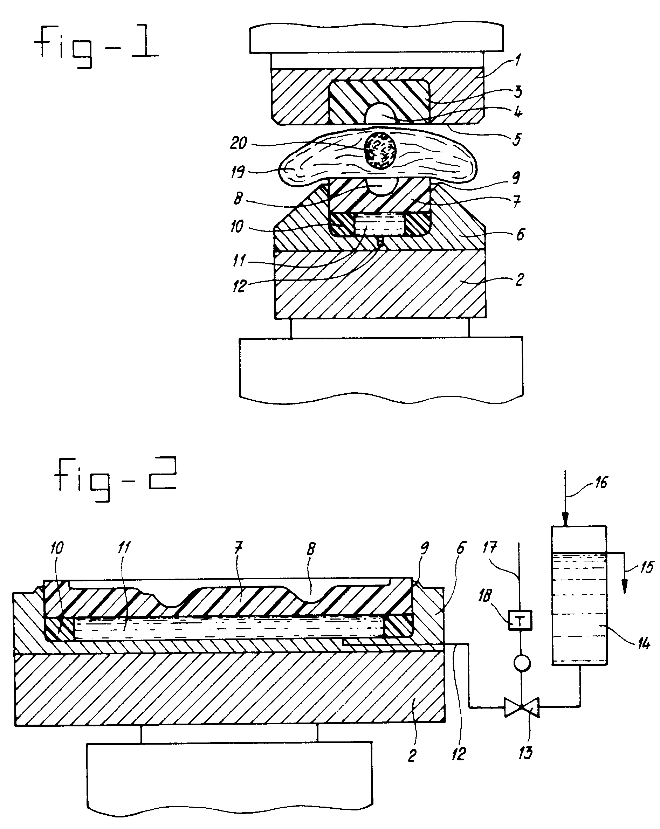

The lower die 2 has an element 6 which in a hollow accommodates a press element 7 with a recess 8 for bone, complementary to recess 4 in element 3 of the upper die. The element 6 has at the top a cutting edge 9 totally enclosing the press element 7. The press element is accommodated in the element 6 so that it is adapted to slide vertically with little play in element 6 and rests on a soft rubber (or plastic) ring 10 surrounding a liquid space 11 between the bottom of element 7 and the bottom of the hollow in element 6. The ring follows the periphery of the recess in element 6 and is thus in this case essentially rectangular with rounded corners. This space is connected by a line 12 to a valve 13 (Fig. 2), which can allow the liquid through in throttling fashion to and from a liquid tank 14 with overflow 15 and filling line 16. The valve 13 is motor-driven, under the influence of a signal line 17, which leads from sensors (not shown) for establishing the closing of the press via a time delay 18 to the valve.

A piece of meat is indicated by 19 and a bone in it by 20.

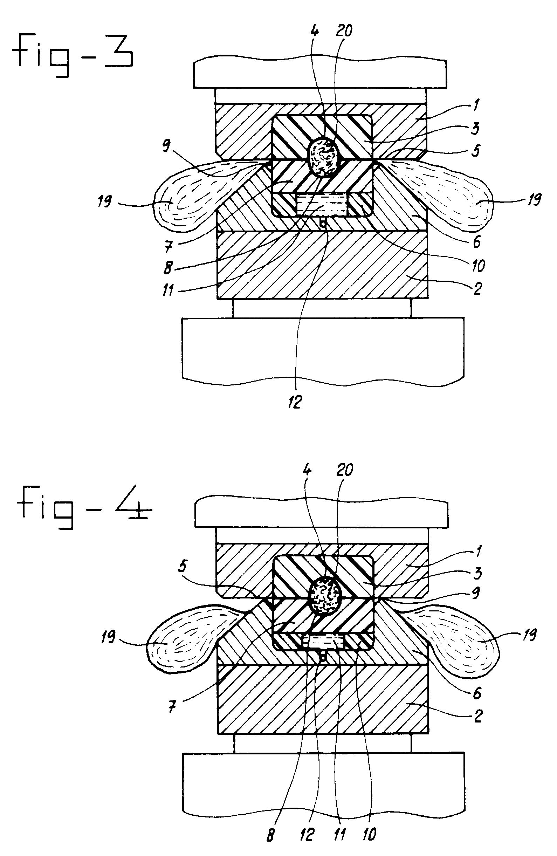

This device then works as follows:
Either the upper die 1 or the lower die 2 can be fixed, and the other one is then movable vertically. When the press dies are moved apart vertically (position in Fig. 1) a piece of meat 19 with bone 20, which is to be boned in the press, is placed on element 7 of the bottom press die 2 with the bone as exactly as possible directly above the recess 8 for it. The liquid space 11 is filled to the maximum with liquid such as water, and the valve 13 is closed. The element 7 herewith extends above the cutting edge 9, for example along a vertical distance of approx. 5 mm. The press is now closed by moving the movable die vertically towards the stationary one. The piece of meat 19 becomes jammed between the hard elastic press elements 3 and 7 and, on further closing, the meat is pressed out sideways between said elements 3 and 7. The increasing downward reaction force which is undergone by the press element 7 in the process puts the liquid confined in space 11 under pressure but, since the volume thereof cannot change, the press element 7 remains projecting above the cutting edge 9. This continues until the relative position of the parts shown in Fig. 3 is reached. The meat 19 then projects on all sides beyond the elements 3 and 7 pressed onto each other, the bone is confined in the hollows 4 and 8, and the meat is still joined to the bone by bone membrane, sinews and the like. The cutting edge 9 is still free from face part 5 of top die 1, as shown in the drawing.

Approach sensors now establish that the press elements 3 and 7 have come onto each other to an adequate extent, and a signal is thereby passed via line 17 to valve 13, but with some delay in device 18, for example 2 secs., in order to make sure that the meat has been pressed out adequately. This delayed signal now opens valve 13 very slowly, so that the pressure in space 11 falls gradually. The liquid flows through valve 13 to tank 14, in which a constant liquid level is maintained through overflow 15 and filling line 16, so that the liquid pressure in space 11 cannot fall further than to this level.

In the meantime the press dies 1 and 2 are moved further towards each other, causing cutting edge 9 to move towards and up against face part 5. During that movement press element 7 is stopped by press element 3 and compresses sealing ring 10, so that it becomes thinner in the direction of pressing and wider at right angles thereto (Fig. 4). The liquid space 11 becomes smaller and excess liquid is pressed out easily through the still open valve 13. It is now possible at a desired moment, i.e. at a desired volume of space 11, to close the valve 13, but this is not always necessary at this stage. The total pressure force by the press elements now acts to a much lesser extent on the press elements 3 and 7 and acts largely between cutting edge 9 and counterface part 5, so that the cutting edge 9 presses with great force thereon and cuts off all parts still connecting the meat to the bone. The meat cut off now falls downwards along the slanting sides of element 6 of the lower die and is easily removed.

The press is now opened by moving the press elements 1 and 2 apart vertically to the position shown in Fig. 1. The valve 13 is opened or is kept open, through lack of press reaction force the liquid pressure in space 11 is lower than the pressure at the bottom of tank 14, and the space 11 fills up again with liquid until the situation of Figs. 1 and 3 is obtained. The natural shape of the circular sealing element 10 can help here, because it is selected in such a way that it corresponds to that height of space 11. The press element 7 is thus raised again relative to the cutting edge until it is in said position of Figs. 1 - 3. The valve 13 is now closed and a new press cycle begins.

In addition to the influence of signal line 17, other signal lines can act on the valve 13 to make it produce these described movements automatically, for example the closing can be controlled by sensors which establish that the press is open far enough, or that the press element 7 is projecting far enough above the cutting edge when the press is open.

## Claims

1. Device for boning meat, comprising a press with two press elements (1, 2), one of which can move towards the other to press the meat with bones between their pressure faces in order to detach the meat from the bones and release it sideways from between the pressure faces, with a cutting edge (9) for cutting away the meat (19) from the bone (20) left behind between the pressure faces at the end of the pressing operation, in which the cutting edge (9) is fitted on one of the press elements (1, 2) and cuts by being pressed towards and against a counterface (5) on the opposite press element, and in which at least one of the press elements (2) is in two parts, having in the pressing zone inside of the cutting edge (9) a first part (7) for contacting and pressing the meat to be boned, said first part (7) being accommodated in a second part (6) which extends around the first part and forms the cutting edge (9) or the counterface (5) thereof, said first part (7) situated within the cutting edge (9) being supported at its surface opposite the contacting and pressing surface by a fluid in a closed space (11) located opposite the contacting and pressing surface, **characterized** in that the space is filled with liquid and located between said opposite surface of the first part and the bottom of a recess in said second part, in that said first part (7) is supported via the liquid by the bottom of the recess in said second part (6) which is adapted to accomodate the first part (7) therein, said space being connected to a valve (13), which when closed shuts off the liquid in said space (11) so that during pressing said liquid is brought under pressure, and which when open gives said liquid the chance to leave said space (11) to the extent that the pressure in said space is lowered, so that on further movement of the press elements towards each other with open valve (13) the press load is transmitted essentially totally to the second part (6) alone, the dimensions of the first and second parts (7, 6) and of said liquid-filled space (11) in the direction of pressing being such that with closed valve (13) during pressing the first part (7) first acts against pressure surface of the other press element (1) without contact of cutting edge (9) and counterface (5), and that, with open valve (13), the first part (7) is moved deeper into the second part (6) to cause contact of cutting edge (9) and counterface (5).

2. Device according to Claim 1, in which the said first part (7) engages in the second part ( 6 ) in a sliding fit in the direction of pressing, and a peripheral elastically deformable sealing element (10) is located between the said opposite surface of the first part and the bottom of the recess and defines and shuts off the liquid space (11) along the edge thereof between them, said sealing element (10) being capable of becoming shorter in one direction and simultaneously thicker in the direction perpendicular thereto.

3. Device according to Claim 2, in which said first part (7) rests with its bottom directly on the liquid space (11) and on the sealing element (10).

4. Device according to any of the preceding claims, with approximately vertical direction of pressing, in which the liquid space (11) is disposed in the bottom press element (1, 6).

5. Device according to any of the preceding claims, in which when the liquid space (11) is filled and shut off for pressing the pressure faces within the cutting edge (9) in the direction of pressing lie closer together than the cutting edge (9) and its counterface (5).

6. Device according to any of the preceding claims, in which sensors observe the closing of the press for boning, and a time delay device (18) is fitted in a signal line (17) to the valve (13) to open the liquid space (11) at the end of the boning operation to initiate the cutting operation.

**Patentansprüche**

1. Vorrichtung zum Entbeinen von Fleisch, welche eine Preßeinrichtung mit zwei Preßelementen (1, 2) aufweist, von denen eines auf das andere zu bewegt werden kann, um das Fleisch mit den Knochen zwischen ihren Druckflächen zusammenzudrücken, und um das Fleisch von den Knochen zu lösen sowie dieses zur Seite hin aus dem Raum zwischen den Druckflächen abzugeben, mit einer Schneidkante (9) zum Abtrennen des Fleisches (19) von dem Knochen (20), welcher zwischen den Druckflächen an dem Ende des Preßvorganges zurückgelassen wird, wobei die Schneidkante (9) an einem der Preßelemente (1, 2) angebracht ist und einen Schneidvorgang durch Andrücken auf und gegen eine Gegenfläche (5) auf dem gegenüberliegenden Preßelement ausführt, und bei der wenigstens eines der Preßelemente (2) in zwei Teilen ausgelegt ist, in der Preßzone innenseitig von der Schneidkante (9) ein erstes Teil (7) zum Berühren und Preßbeaufschlagen des zu entbeinenden Fleisches hat, das erste Teil (7) in einem zweiten Teil (6) aufgenommen ist, welches sich um das erste Teil erstreckt, und die Schneidkante (9) oder die Gegenfläche (5) bildet, und bei der das in der Schneidkante (9) liegende erste Teil (7) an der der Kontakt- und Preßfläche gegenüberliegenden Fläche durch ein Fluid in einem geschlossenen Raum (11) abgestützt ist, der der Kontakt- und Preßfläche gegenüberliegt, dadurch **gekennzeichnet** , daß der Raum mit Flüssigkeit gefüllt und zwischen der gegenüberliegenden Fläche des ersten Teils und dem Boden einer Ausnehmung im zweiten Teil liegt, daß das erste Teil (7) über die Flüssigkeit durch den Boden der Ausnehmung im zweiten Teil (6) abgestützt ist, welches derart ausgelegt ist, daß es das erste Teil (7) darin aufnimmt, daß der Raum mit einem Ventil (13) verbunden ist, welches im Schließzustand die Flüssigkeit in dem Raum (11) absperrt, so daß während der Preßbeaufschlagung die Flüssigkeit unter Druck gesetzt wird, und das im Öffnungszustand der Flüssigkeit die Möglichkeit gibt, den Raum (11) in einem solchen Ausmaß zu verlassen, daß der Druck in dem Raum abgesenkt wird, so daß eine weitere Bewegung der Preßelemente in Richtung aufeinander zu bei offenem Ventil (13) die Preßbelastung im wesentlichen vollständig allein auf das zweite Teil (6) übertragen wird, daß die Abmessungen des ersten und zweiten Teils (7, 6) und des mit Flüssigkeit gefüllten Raumes (11) in Preßbeaufschlagungsrichtung derart gewählt sind, daß beim geschlossenen Ventil (13) während der Preßbeaufschlagung das erste Teil (7) zuerst die Druckfläche des anderen Preßelements (1) beaufschlagt,ohne dass die Schneidkante (9) und die Gegenfläche (5) sich berühren, und daß bei offenem Ventil (13) das erste Teil (7) tiefer in das zweite Teil (6) bewegt wird, um einen Kontakt von Schneidkante (9) und Gegenfläche (5) zu bewirken.

2. Vorrichtung nach Anspruch 1, bei der das erste Teil (7) mittels eines Gleitsitzes in dem zweiten Teil (6) in Preßbeaufschlagungsrichtung in Eingriff ist und ein peripherisches elastisch verformbares Umfangsdichtungselement (10) zwischen der gegenüberliegenden Fläche des ersten Teils und dem Grund der Ausnehmung angeordnet ist und den Flüssigkeitsraum (11) längs des Randes derselben zwischen diesen Teilen begrenzt und absperrt, und bei der das Dichtungselement (10) die Fähigkeit hat, in einer Richtung kürzer zu werden und gleichzeitig in einer Richtung senkrecht hierzu dicker zu werden.

3. Vorrichtung nach Anspruch 2, bei der das erste Teil (7) mit seinem Boden direkt auf dem Flüssigkeitsraum (11) und auf dem Dichtungselement (10) aufliegt.

4. Vorrichtung nach einem der vorangehenden Ansprüche, mit einer Preßbeaufschlagung nahezu in vertikaler Richtung, bei der der Flüssigkeitsraum (11) in dem bodenseitigen Preßelement (1, 6) angeordnet ist.

5. Vorrichtung nach einem der vorangehenden Ansprüche,. bei der bei aufgefülltem und abgesperrtem Flüssigkeitsraum (11) zur Preßbeaufschlagung der Preßflächen innerhalb der Schneidkante (9) in Richtung der Preßbeaufschlagung diese näher als die Schneidkante (9) und ihrer Gegenfläche (5) liegen.

6. Vorrichtung nach einem der vorangehenden Ansprüche, bei der Sensoren das Schließen der Preßeinrichtung zum Entbeinen überwachen und eine Zeitverzögerungseinrichtung (18) in einer Signalleitung (17) zu dem Ventil (13) angeordnet ist, um den Flüssigkeitsraum (11) am Ende des Entbeinungsvorganges zur Einleitung des Schneidvorganges zu öffnen.

**Revendications**

1. Dispositif de désossage de la viande comprenant une presse comprenant deux eléments de presse (1, 2), l'un d'entre eux pouvant se déplacer en direction de l'autre pour presser la viande avec les os entre leurs surfaces de pression, de manière à détacher la viande des os et à la dégager des surfaces de pression par les côtés, muni d'un couteau (9) pour séparer la viande (19) de l'os (20) restant entre les surfaces de pression à la fin de l'opération de pressage, de manière que le couteau (9) soit monté sur l'un des éléments de presse (1, 2) et exécute la coupe lorsqu'il est pressé en direction d'une contre-face (5) de l'élément de presse opposé et contre celle-ci, et dans lequel au moins un des éléments de presse (2) est en deux parties et comprend, dans la zone de pression, à l'intérieur du couteau (9), une première partie (7) venant en contact sur la viande à désosser et exerçant une pression sur celle-ci, ladite première partie (7) étant logée dans une seconde partie (6) s'étendant autour de la première partie et formant le couteau (9) ou la contre-face (5) opposée à celui-ci, ladite première partie (7) montée dans le couteau (9) étant supportée sur sa face opposée à la surface de contact et de pression par un fluide dans une chambre fermé (11) disposée à l'opposé de la surface de contact et de pression, caractérisé en ce que la chambre est remplie de liquide et située entre ladite surface opposée de la première partie et le fond d'une cavité ménagée dans ladite seconde partie en ce que ladite première partie (7) est supportée, par l'intermédiaire du liquide, par le fond de la cavité ménagée dans ladite seconde partie (6) qui est agencée pour recevoir la première partie (7) à l'intérieur, ladite chambre étant reliée à une vanne (13) qui, lorsqu'elle est fermée, intercepte le liquide dans ladite chambre (11) de manière que lors du préssage, ledit liquide soit sous pression et lorsqu'elle est ouverte, ledit liquide puisse s'échapper de ladite chambre (11) dans une mesure telle qu'à abaisser la pression dans ladite chambre de manière que lors de la poursuite du déplacement des éléments de presse l'un vers l'autre quand la vanne (13) est ouverte, la charge de la presse soit transmise essentiellement en totalité uniquement à la seconde partie (6), les dimensions des première et seconde parties (7, 6) et celles de ladite chambre remplie de liquide (11) dans la direction de la pression étant telles que lorsque la vanne (13) est fermée pendant le pressage, la première partie (7) agit tout d'abord rentre la surface de pression de l'autre élément de presse (1) sans que le couteau (9) et que la contre-face (5) viennent en contact et, lorsque la vanne (13) est ouverte, la première partie (7) s'enfonce plus profondément dans la seconde partie (6) pour amener le couteau (9) et la contreface (5) en contact.

2. Dispositif selon la revendication 1, dans lequel ladite première partie (7) pénètre dans la seconde partie (6) par ajustement glissant dans la direction d'application de la pression, et qu'un organe d'étanchéité périphérique, déformable élastiquement (10) est placé entre ladite surface opposée de ladite première partie et le fond de la cavité et définit et obture la chambre de liquide (11) le long de son bord entre les deux, ledit organe d'étanchéité (10) pouvant se raccourcir dans une direction en devenant simultanément plus épais dans la direction perpendiculaire à celle-ci.

3. Dispositif selon la revendication 2, dans lequel ladite première partie (7) repose directement par son fond sur la chambre de liquide (11) et sur l'organe d'étanchéité (10).

4. Dispositif selon l'une quelconque des précédentes revendications, ayant une direction d'application de la pression approximativement verticale, et dans lequel la chambre de liquide (11) est disposée dans l'élément de fond de la presse (1, 6).

5. Dispositif selon l'une quelconque des précédentes revendications dans lequel, lorsque la chambre de liquide (11) est remplie et obturée pour le pressage les surfaces de pression à l'intérieur du couteau (9), dans la direction d'application de la pression, sont plus rapprorhees entre elles que le couteau (9) et sa contre-face (5).

6. Dispositif selon l'une quelconque des précédentes revendications, dans lequel des capteurs surveillent la fermeture de la presse à désosser, et un dispositif de temporisation (18) est monte dans une ligne de signalisation (17) reliée à la vanne (13), pour ouvrir la chambre de liquide (11) à la fin d'une opération de désossage, afin de démarrer l'opération de coupe.

fig-1

fig-2

Fig-3

Fig-4